(19) Europäisches Patentamt
European Patent Office
Office européen des brevets

(11) EP 2 848 664 A1

(12) **EUROPÄISCHE PATENTANMELDUNG**

(43) Veröffentlichungstag:
**18.03.2015 Patentblatt 2015/12**

(51) Int Cl.:
***C09D 183/08*** *(2006.01)*

(21) Anmeldenummer: **14181517.5**

(22) Anmeldetag: **20.08.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **11.09.2013 DE 102013218134**

(71) Anmelder: **Evonik Industries AG**
**45128 Essen (DE)**

(72) Erfinder:
- **de Gans, Berend-Jan**
  **45478 Mülheim an der Ruhr (DE)**
- **Herrwerth, Sascha**
  **45134 Essen (DE)**
- **Trambitas, Alexandra**
  **45130 Essen (DE)**
- **Dahl, Verena**
  **50858 Köln (DE)**
- **Hicking, Sylvia**
  **45239 Essen (DE)**
- **Giuffre, Giuseppe**
  **46119 Oberhausen (DE)**

(54) **Beschichtungsmittel enthaltend Polysiloxan-Quats**

(57) Gegenstand der vorliegenden Erfindung ist ein härtbares Beschichtungsmittel enthaltend mindestens ein lineares oder zyklisches Polysiloxan beinhaltend mindestens eine quartäre Ammoniumgruppe, ein Verfahren zur Herstellung des vorgenannten Beschichtungsmittels sowie ein Verfahren zur Herstellung einer Beschichtung mit dem härtbaren Beschichtungsmittel, ebenso wie die Beschichtungen und Beschichtungsmittel selber, die durch die beschriebenen Verfahren erhältlich sind.

EP 2 848 664 A1

## Beschreibung

### Gebiet der Erfindung

Gegenstand der vorliegenden Erfindung ist ein härtbares Beschichtungsmittel enthaltend mindestens ein lineares oder zyklisches Polysiloxan beinhaltend mindestens eine quartäre Ammoniumgruppe, ein Verfahren zur Herstellung des vorgenannten Beschichtungsmittels sowie ein Verfahren zur Herstellung einer Beschichtung mit dem härtbaren Beschichtungsmittel, ebenso wie die Beschichtungen und Beschichtungsmittel selber, die durch die beschriebenen Verfahren erhältlich sind.

### Stand der Technik

Die Verwendung von Polysiloxanen enthaltend quarternierte Stickstoffgruppen sind insbesondere in Kosmetikanwendungen schon lange bekannt. Sie dienen dort in der Regel im Rahmen von abzuwaschenden Formulierungen als Konditioniermittel für Haut und Haare. So beschreiben beispielsweise EP0282720 und EP0294642 solche kationischen Polysiloxane in Kosmetikanwendungen, bei denen die quartären Funktionen endständig an das Polysiloxan gebunden sind. Derartige Verbindungen bieten Vorteile hinsichtlich ihrer Wirkung als Konditioniermittel sowohl für Haare und Textilien als auch für harte Oberflächen. Die Verwendung solcher Verbindungen in kosmetischen Formulierungen ist weiterhin in der EP0530974, EP617607, EP 080714, WO 2001082879 und US6207141 beschrieben worden.

Die Verwendung von Polysiloxanen an sich in Beschichtungsmittel, wie beispielsweise Farben und Lacke, ist ebenfalls schon lange bekannt und sogar weit verbreitet. Polysiloxane werden eingesetzt als Entschäumer und Entlüfter, als Benetzungsmittel und als Gleitadditiv. Die Anwendung als Gleitadditiv beruht auf die Anlagerung des Polysiloxans an der Beschichtungsoberfläche.

Die Zugabe von geringsten Mengen herkömmlichen Polysiloxans kann allerdings zu Störungen der getrockneten Lackschicht führen die den Fachmann als "Krater" bekannt sind. Deswegen ist die Verwendung von Polysiloxanen in manchen Anwendungen streng limitiert oder sogar verboten. Eine mögliche Lösung für dieses Problem besteht darin, das Polysiloxan kovalent direkt an das Bindemittel, beispielsweise Polyester oder Polyether, zu binden; dadurch entsteht ein Kopolymer. Ein Beispiel ist das Produkt "Silikopur 8080" der Firma Evonik.

Eine weitere Klasse von Polysiloxanen, die in wässrigen Beschichtungen eingesetzt werden, sind die Aminosiloxane. Eine zu hohe Konzentration des Aminosiloxans kann allerdings zu Instabilität und Flokkulation des Bindemittels führen. Die Einarbeitung solcher Aminosiloxane in wässrige Beschichtungsmittel erfordert außerdem eine strenge Einhaltung des pH-Wertes zwischen 5 und 7.

Ein weiterer Nachteil von Aminosiloxanen ist die Tatsache, dass die Aminogruppe die Zersetzung der Polysiloxankette katalysiert. Es bilden sich kurzkettige Siloxanoligomere, die dann durch Verdunstung verloren gehen, und das Additiv seine Wirkung verliert.

Aufgabe der Erfindung war es, neue Beschichtungsmittel mit herausragenden Eigenschaften hinsichtlich Verarbeitbarkeit und anwendungstechnischen Eigenschaften bereitzustellen, wobei mindestens eine der vorgenannten Nachteile des Standes der Technik überwunden wird.

### Beschreibung der Erfindung

Überraschenderweise wurde gefunden, dass Beimischungen von quartären Ammoniumgruppen tragenden Polysiloxanen in Beschichtungsmitteln die der Erfindung gestellte Aufgabe zu lösen vermögen.

Gegenstand der vorliegenden Erfindung ist daher ein härtbares Beschichtungsmittel enthaltend mindestens ein lineares oder zyklisches Polysiloxan beinhaltend mindestens eine quartäre Ammoniumgruppe.

Ein weiterer Gegenstand der vorliegenden Erfindung ist ein Verfahren zur Herstellung eines Beschichtungsmittels unter Einsatz einer Mikroemulsion.

Noch ein Gegenstand der vorliegenden Erfindung ist ein Verfahren zur Herstellung einer Beschichtung.

Ein Vorteil der vorliegenden Erfindung ist, dass die mit quartären Ammoniumgruppen modifizierten Polysiloxanen eine sehr gute Verträglichkeit im Lacksystem aufweisen.

Ein Vorteil der vorliegenden Erfindung ist, dass im Gegensatz zu mit Aminosiloxanen additivierten Beschichtungsmitteln die Beschichtungsmittel, die mit quartären Ammoniumgruppen modifizierten Polysiloxanen additiviert wurden, auch bei pH-Werten von größer 7 stabil sind.

Ein Vorteil der vorliegenden Erfindung ist, dass im Gegensatz zu mit Aminosiloxanen additivierten Beschichtungsmitteln, die Beschichtungsmittel, die mit quartären Ammoniumgruppen modifizierten Polysiloxanen additiviert wurden, eine ausgezeichnete Langzeitstabilität haben, ohne dass die Wirkung des Polysiloxans verloren geht.

Ein Vorteil der vorliegenden Erfindung ist, dass die Beschichtungsmittel wasserverdünnbar sind, ohne dass sich die Viskosität der Beschichtungsmittel wesentlich erhöht.

Noch ein Vorteil der vorliegenden Erfindung ist, dass die erhältlichen Beschichtungen einen reduzierten Gleitwert aufweisen.

Noch ein Vorteil der vorliegenden Erfindung ist, dass die erhältlichen Beschichtungen eine reduzierte Anschmutzneigung aufweisen.

Noch ein Vorteil der vorliegenden Erfindung ist, dass die erhältlichen Beschichtungen in ihrer Hydrophobizität erhöht werden.

Ein weiterer Vorteil der vorliegenden Erfindung ist, dass die erhältlichen Beschichtungen eine erhöhte Reibechtheit aufweisen.

Ein weiterer Vorteil der vorliegenden Erfindung ist, dass die erhältlichen Beschichtungen eine verbesserte Nassknitterfestigkeit aufweisen.

Ein weiterer Vorteil der vorliegenden Erfindung ist, dass die erhältlichen Beschichtungen eine erhöhte Flexibilität aufweisen.

Ein weiterer Vorteil der vorliegenden Erfindung ist, dass die erhältlichen Beschichtungen eine erhöhte Kratzfestigkeit aufweisen.

Ein weiterer Vorteil der vorliegenden Erfindung ist, dass die erhältlichen Beschichtungsmittel eine geringere Schaumneigung haben.

Gegenstand der vorliegenden Erfindung ist ein härtbares Beschichtungsmittel enthaltend

A) mindestens ein lineares oder zyklisches, bevorzugt lineares, Polysiloxan beinhaltend mindestens eine quartäre Ammoniumgruppe, wobei insbesondere lineare Polysiloxane bevorzugt sind, bei denen die mindestens eine quartäre Ammoniumgruppe $\alpha,\omega$-ständig ist.

Der Begriff "quartäre Ammoniumgruppe" im Sinne der vorliegenden Erfindung beinhaltet eine einwertig positiv geladene Gruppe mit einem vierbindigen Stickstoff.

Als Beispiel sei folgende allgemeine Formel genannt

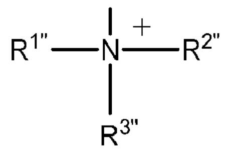

wobei $R^{1''}$, $R^{2''}$ und $R^{3''}$ unabhängig voneinander gleiche oder ungleiche, verzweigte oder unverzweigte, gegebenenfalls substituierte Kohlenwasserstoffreste, die gegebenenfalls Ester-, Amid- oder Etherfunktionen beinhalten.

Unter dem Begriff "lineares Polysiloxan" im Sinne der vorliegenden Erfindung wird ein in ihrer SiO-Kette nicht verzweigtes Polysiloxan verstanden.

Unter dem Begriff "zyklisches Polysiloxan" im Sinne der vorliegenden Erfindung wird ein in ihrer SiO-Kette kreisförmiges Polysiloxan verstanden.

Alle angegebenen Prozent (%) sind, wenn nicht anders angegeben, Massenprozent. Alle Bedingungen wie beispielsweise Druck und Temperatur sind, wenn nicht anders angegeben, Standardbedingungen.

Erfindungsgemäß bevorzugte Beschichtungsmittel der vorliegenden Erfindung sind dadurch gekennzeichnet, dass das Polysiloxan ausgewählt ist aus der Gruppe Polysiloxane der allgemeinen Formel I)

$$M_aM'_{a1}M''_{a2}M'''_{a3}D_b \qquad \text{allgemeine Formel I)}$$

wobei
$M = (R^1_3SiO_{1/2})$
$M' = (R^2R^1_2SiO_{1/2})$
$M'' = (R^3R^1_2SiO_{1/2})$
$M''' = (R^4R^1_2Si\,O_{1/2})$
$D = (R^1_2\,Si\,O_{2/2})$
a = 0 bis 1;
a1 = 0 bis 1;
a2 = 0 bis 1;
a3 = 0 bis 2, bevorzugt 2;
mit der Maßgabe, dass

$$a + a1 + a2 + a3 = 2;$$

b = 1 bis 500, bevorzugt 10 bis 400, besonders bevorzugt 20 bis 300;
$R^1$ = unabhängig voneinander gleiche oder verschiedene lineare oder verzweigte, gegebenenfalls aromatische Kohlenwasserstoffreste mit 1 bis 30 Kohlenstoffatomen, bevorzugt Methyl oder Phenyl, insbesondere Methyl;
$R^2$ = unabhängig voneinander gleiche oder verschiedene Alkoxy- oder Acyloxyreste, wie beispielsweise Methoxy-, Ethoxy-, n-Propoxy oder iso-Propoxyreste, Acetoxy, Hydroxy insbesondere Ethoxy oder iso-Propoxyreste;
$R^3$ = unabhängig voneinander gleiche oder verschiedene organische Epoxy-Reste;
$R^4$ = unabhängig voneinander gleiche oder verschiedene organische Reste, die quartäre Ammoniumfunktionen tragen;
sind.

Geeignete Epoxy-Reste $R^3$ sind zum Beispiel vorzugsweise gleiche oder verschiedene Reste ausgewählt aus der Gruppe

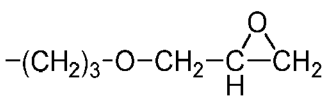

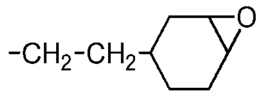

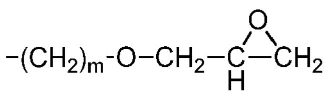

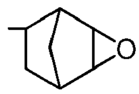

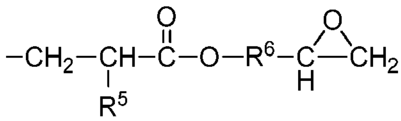

.

mit $R^5$ gleiche oder verschiedene Reste aus der Gruppe Wasserstoff oder Alkyl mit 1 bis 6 C-Atomen, bevorzugt Methyl und
$R^6$ gleiche oder verschiedene zweiwertige Kohlenwasserstoffreste, die gegebenenfalls Etherfunktionen enthalten, bevorzugt Methylen.
Geeignete Reste $R^4$ sind zum Beispiel Gruppen mit dem Aufbau $-R^7-R^8$,
worin
$R^7$ vorzugsweise gleiche oder verschiedene zweiwertige Reste sind, ausgewählt aus der Gruppe

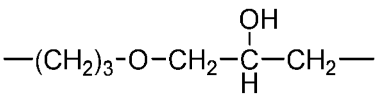

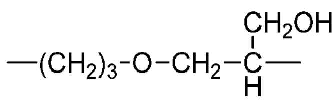

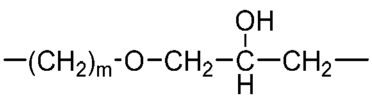

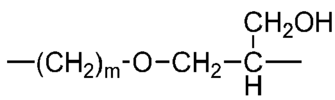

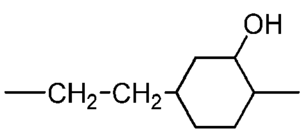

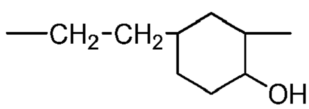

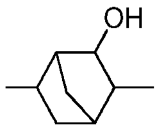

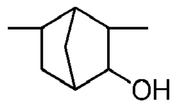

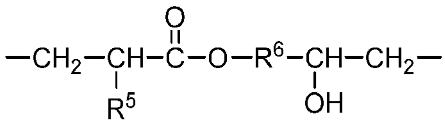

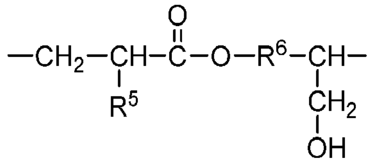

mit m = 2 bis 18;

$R^5$ gleiche oder verschiedene Reste aus der Gruppe Wasserstoff oder Alkyl mit 1 bis 6 C-Atomen, bevorzugt Methyl;

$R^6$ gleiche oder verschiedene zweiwertige Kohlenwasserstoffreste, die gegebenenfalls Etherfunktionen enthalten, bevorzugt Methylen und

$R^8$ ausgewählt aus der Gruppe bestehend aus

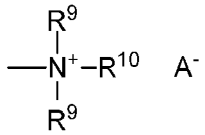

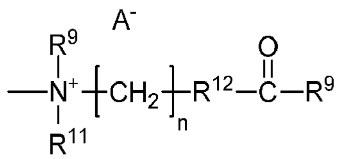

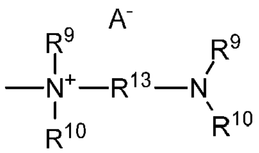

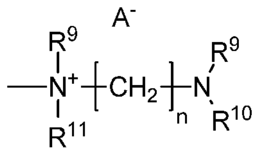

mit

$R^9$, $R^{10}$, $R^{11}$ sind jeweils unabhängig voneinander Alkylreste mit 1 bis 30 C-Atomen oder Reste der Formel

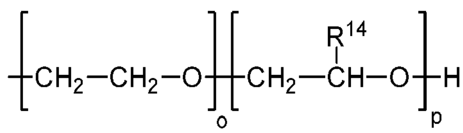

,

wobei

o = 0 bis 30, bevorzugt 0 bis 10, insbesondere 1 bis 3,

p = 0 bis 30, bevorzugt 0 bis 10 und

$R^{14}$ gleiche oder verschiedene Alkyl-, Aryl- oder Alkarylreste mit 1 bis 30 C-Atomen, die gegebenenfalls Etherfunktionen enthalten, bevorzugt Methyl, Ethyl oder Phenyl, insbesondere Methyl;

$R^{12}$ sind gleiche oder verschiedene Reste aus der Gruppe -O-; $-NR^{15}-$,

mit $R^{15}$ gleiche oder verschiedene Reste aus der Gruppe Wasserstoff oder Alkyl mit 1 bis 6 C-Atomen;

$R^{13}$ sind gleiche oder verschiedene gegebenenfalls verzweigte divalente Kohlenwasserstoffreste, bevorzugt Ethylen oder Propylen;

n = 2 bis 18, bevorzugt 3 und

A- gleiche oder verschiedene Gegenionen zu den positiven Ladungen an den quartären Stickstoffgruppen, ausgewählt aus anorganischen oder organischen Anionen der Säuren HA, sowie deren Derivate.

In einer weiteren bevorzugten Ausführungsform der vorliegenden Erfindung besteht das Gegenion $A^-$ zu den positiven Ladungen an den quartären Stickstoffgruppen aus dem Anion einer physiologisch verträglichen Säure HA, die besonders bevorzugt aus Essigsäure, L-Hydroxycarbonsäuren, insbesondere Milchsäure, oder aromatischen Carbonsäuren ausgewählt ist.

Weitere bevorzugte Gegenionen stammen aus gängigen Quarternierungsmitteln. Dies sind insbesondere Ethylsulfat, Methylsulfat, Toluolsulfonat, Chlorid und Bromid.

Bezeichnet man bei den Polysiloxanen der allgemeinen Formel (I) die quartären Stickstoffgruppen mit A und die Polysiloxanblöcke mit B handelt sich bei den erfindungsgemäß enthaltenen Polysiloxanen der allgemeinen Formel (I) um polymere Verbindungen der Struktur ABA.

Es ist dem Fachmann geläufig, dass die Verbindungen in Form eines Gemisches mit einer im Wesentlichen durch statistische Gesetze geregelten Verteilung vorliegen.

Entsprechende Herstellverfahren für die vorbeschriebenen Polysiloxane der allgemeinen Formel I) finden sich in der EP0294642.

Der Anteil von Komponente A) in dem erfindungsgemäßen Beschichtungsmittel beträgt 0,01 bis 5 Gew.-%, insbesondere 0,05 bis 2 Gew.-%, bezogen auf das Beschichtungsmittel.

Bevorzugte erfindungsgemäße Beschichtungsmittel sind durch Licht, insbesondere UV-Licht, härtbare oder durch Trocknung härtbare Beschichtungsmittel.

Bevorzugte erfindungsgemäße Beschichtungsmittel sind wässrige Beschichtungsmittel, somit enthalten sie mindestens 20 Gew.-%, insbesondere mindestens 40 Gew.-%, Wasser, wobei sich die Gewichtsangaben auf das Gesamtbeschichtungsmittel beziehen.

Weiterhin kann das erfindungsgemäße Beschichtungsmittel optional eine oder mehrere Bindemittel-Komponente B) enthalten. Grundsätzlich eignen sich als Bindemittel-Komponenten alle dem Fachmann bekannten Arten von Bindemitteln, insbesondere geeignet für wäßrige Beschichtungsmittel, beispielsweise auch thermoplastische, das heißt nicht vernetzbare Bindemittel, die üblicherweise ein mittleres Molekulargewicht > 10000 g/mol aufweisen.

Ein Übersicht solcher Bindemittel kann zum Beispiel das in 2001 veröffentlichte Buch "Lehrbuch der Lacke und Beschichtungen", Teil 3: Bindemittel für wasserverdünnbare Systeme", zweite Auflage, von H. Kittel entnommen werden.

Bevorzugte erfindungsgemäße Beschichtungsmittel enthalten mindestens eine Komponente B) ausgewählt aus der Gruppe bestehend aus wasserdispergierbaren Polyester-, Alkyd-, Maleinat-, Epoxid- und Phenol-Formaldehydharzen, Melamin-Formaldehydharze (auch Aminoharze genannt), wasserdispergierbare Acryl- und Methacrylcopolymeren, wässrige Dispersionen von Polymeren aus ethylenisch ungesättigten Verbindungen wie zum Beispiel Styrol, Butadien, Acrylate, Methacrylate, Ethylen, Vinylchlorid, und Vinylalkoholester, wässrige Polyurethan- und Polyharnstoffdispersionen, wässrige Silikonharz-, Epoxidharz- und Epoxyacrylatdispersionen, und Bitumenemulsionen.

Bevorzugt weist das Beschichtungsmittel als Komponente B) wässrige Polyurethandispersionen auf, wie sie zB unter dem Handelsnamen "Bayderm", von der Firma Lanxess oder dem Handelsnamen "Aqualen" von der Firma Clariant erhältlich sind. Solche

Polyurethandispersionen sind erhältlich als nicht-nachvernetzbare Dispersionen, auch bekannt als 1 K-PU Dispersionen, oder als nachvernetzbare Systeme. Die Nachvernetzung kann bei nachvernetzbaren Systemen chemisch erfolgen, durch Zugabe eines geeigneten Vernetzers und/oder Katalysators kurz vor der Verarbeitung, thermisch, durch Reaktion von bei Raumtemperatur unreaktiven, im Bindemittel kovalent eingebundenen Gruppen, oder durch Strahlung. Im letzten Fall sollen Gruppen, zum Beispiel ethylenisch ungesättigte Gruppen im Polymergerüst eingebaut sein die durch Strahlung, eventuell unter den Einfluss eines Initiators miteinander reagieren.

Die Herstellung von Polyurethandispersionen ist Stand der Technik. Sie wird beispielsweise in den folgenden Schriften beschrieben:

- EP228003A1, Seite 3, Zeile 24 bis Seite 5, Zeile 46
- EP634431A1, Seite 3, Zeile 38 bis Seite 8, Zeile 9
- WO92/15405, Seite 2, Zeile 35 bis Seite 10, Zeile 32
- WO2012/130711A2, Seite 2, Zeile 9 bis Seite 12, Zeile 4.

Die Herstellung von strahlungshärtenden, beziehungsweise thermisch nachvernetzbaren Polyurethandispersionen ist ebenfalls Stand der Technik. Sie wird beispielsweise in den folgenden Schriften beschrieben:

- DE10114689A1, Seite 2, Abschnitt 0017 bis Seite 22, Abschnitt 103
- DE102009008950A1, Seite 3, Abschnitt 0017 bis Seite 9, Abschnitt 0071

Der Anteil von Komponente B) in dem erfindungsgemäßen Beschichtungsmittel beträgt insbesondere 1 Gew.-% bis 80 Gew.-%, bezogen auf das gesamte Beschichtungsmittel, insbesondere 5 Gew.-% bis 60 Gew.-%.

Das Massenverhältnis der Komponente A) zu der Komponente B) beträgt in dem erfindungsgemäßen Beschichtungsmittel vorzugsweise 1:500 bis 1:10.

Das Beschichtungsmittel kann zusätzliche Vernetzer enthalten, beispielsweise Melaminharzen, Harnstoffharzen, Epoxidharzen, (Poly)Glycidylethern, (Poly)Isocyanaten, (Poly)Isocyanurate, (Poly)Aziridinen, (Poly)Carbodiimiden, (Poly)Siloxanen, Ketoester, Ketoamiden, 1,3-Diketonen und Ketomethylenarylverbindungen. Das Beschichtungsmittel kann Pigmente und Füllstoffe enthalten (z.B. Quartzmehl, gefällte oder pyrogene Kieselsäure, Kreide, Titandioxid). Des Weiteren können den Emulsionen auch aus der Literatur und dem Stand der Technik bekannte Hilfsstoffe zugesetzt

werden. Dazu zählen beispielsweise rheologische Additive (z.B. Polyurethanverdicker, Xanthangummi, Guarkernmehl, Carboxymethylzellulose, Polyacrylate, Polyvinylalkohol, Polyvinylpyrrolidon, Carboxyvinylpolymere, Hydroxyethylzellulose und Polyethylenimine), (teilweise) wassermischbare organische Lösemittel (z.B. Glykole und Glykolethern wie sie z.B unter dem Handelsnamen Dowanol von der Firma Dow erhaltlich sind, Alkohole, Glycerol, Polyethylenglykol). Weitere Beispiele sind antimikrobielle und konservierende Stoffe (z.B. Methylisothiazolinone, Benzisothiazolinone), Netzmittel (z.B. Trisiloxane, 2,4,7,9-Tetramethyl-5-decyn-4,7-diol), Antioxidantien, Dispergiermittel, Entschäumer und Entlüfter, Frostschutzmittel, Algizide, Fungizide, Haftvermittler und/oder Reaktivverdünner sowie Weichmacher (z.B. Phthalate, Benzoate, Phosphatweichmacher) und Komplexbildner (z.B EDTA, Zitronensäure und Etidronsäure sowie deren Salze). Auch Lichtschutzmittel, Radikalfänger, UV-Absorber (z.B. Benzophenonderivate, Benzotriazolderivate, Zimtsäureester oder partikuläre UV-Absorber wie beispielsweise ZnO oder $TiO_2$, sowie weitere Stabilisatoren können den Beschichtungsmittel zugesetzt werden.

Ein weiterer Gegenstand der vorliegenden Erfindung ist ein Verfahren zur Herstellung von härtbaren Beschichtungsmitteln umfassend die Verfahrensschritte:

1.) Bereitstellen einer wässrigen Emulsion, insbesondere einer Mikroemulsion, enthaltend mindestens ein lineares oder zyklisches, bevorzugt lineares, Polysiloxan beinhaltend mindestens eine quartäre Ammoniumgruppe, wobei insbesondere lineare Polysiloxane bevorzugt sind, bei denen die mindestens eine quartäre Ammoniumgruppe $\alpha,\omega$-ständig ist, und
2.) Einbringen der wässrigen Emulsion in ein härtbares Beschichtungsmittel.

Unter dem Begriff "wässrige Emulsion" im Zusammenhang mit der vorliegenden Erfindung wird eine Emulsion verstanden, die mindestens 5 Gew.-%, bevorzugt 10 Gew.-%, besonders bevorzugt 15 Gew.-%,Wasser, bezogen auf die Gesamtemulsion, enthält.

Die Polysiloxane werden erfindungsgemäß bevorzugt in Form von Mikroemulsionen eingearbeitet. Für die vorliegende Erfindung werden entsprechende Mikroemulsionen eingesetzt, welche bevorzugt als maßgeblich die Öl-Phase bildende Komponente die vorgenannten Polysiloxane enthalten.

Erfindungsgemäß eingesetzte Mikroemulsionen sind dadurch gekennzeichnet, dass sie bevorzugt mindestens eine der Komponenten enthalten ausgewählt aus

a) mindestens ein nichtionisches Tensid,
b) mindestens ein Cotensid ausgewählt aus der Gruppe enthaltend, bevorzugt bestehend aus anionischen, kationischen und amphoteren Tensiden, und
c) Wasser.

Erfindungsgemäß eingesetzte Mikroemulsionen sind dadurch gekennzeichnet, dass sie mindestens eine der Komponenten a) und c) oder b) und c) oder a) und b) und c) enthalten.

Bevorzugte nichtionische Tenside sind ausgewählt aus der Gruppe enthaltend, bevorzugt bestehend aus lineare oder verzweigte synthetische Alkohole und Carbonsäuren und natürliche Fettalkohole, Fettsäuren, Fettsäureamide, Fettamine, Alkylphenole und dessen Anlagerungsprodukten von Ethylenoxid, Styroloxid und/oder Propylenoxid, 2,4,7,9-Tetramethyl-5-Decyn-4,7-diol und deren Ethylenoxid und/oder Propylenoxidanlagerungsprodukte, Blockcopolymere aus Ethylenoxid und Propylenoxid" Hydrosilylierungsprodukte von allylalkoholgestarteten Blockcopolymeren aus Ethylenoxid und Propylenoxid und zyklischen, verzweigten oder linearen Wasserstoffsiloxanen, Tri-, Tetra- beziehungsweise Pentasiloxantensiden, Anlagerungsprodukten von Ethylenoxid, Styroloxid und/oder Propylenoxid an Fluortelomeralkohole, organomodifizierte Siloxanen (beispielsweise unter dem Namen TWIN® von Evonik Industries erhältlich), Partialether auf Basis linearer, verzweigter, ungesättigter bzw. gesättigter Alkylgruppen und Glycerin,

Glycerinmono- und -diester und Sorbitanmono- und -diester von gesättigten und ungesättigten Fettsäuren und deren Ethylenoxidanlagerungsprodukte, Alkylmono- und -oligoglycoside und deren Ethylenoxidanlagerungsprodukte, Anlagerungsprodukte von Ethylenoxid an Rizinusöl und/oder gehärtetes Rizinusöl, Partialester auf Basis linearer, verzweigter, ungesättigter bzw. gesättigter Fettsäuren, Ricinolsäure, 12-Hydroxystearinsäure, Glycerin, Polyglycerin, Pentaerythrit, Dipentaerythrit und Zuckeralkohole (z.B. Sorbit), Alkylglucoside (z.B. Methylglucosid, Butylglucosid, Laurylglucosid) sowie Polyglucoside (z.B. Cellulose), Mono-, Di- und Trialkylphosphate sowie Mono-, Di- und/oder Tri-PEG-alkylphosphate und deren Salze, Zitronensäureester wie z.B. Glyceryl Stearate Citrate, Glyceryl Oleate Citrate und Dilauryl Citrate sowie Glyceryl Caprylate, Polyglycerylcaprylate, Polyglycerylcaprate,
weiter alkoxylierte Triglyceride, Mischether bzw. Mischformale, gegebenenfalls partiell oxidierte Alkyloligoglykoside oder Alkenyloligoglykoside bzw. Glucuronsäurederivate, Fettsäure-N-alkylglucamide, Proteinhydrolysate (insbesondere pflanzliche Produkte auf Weizenbasis), Polyolfettsäureester, Zuckerester, Polysorbate und Aminoxide
und Mischungen dieser Tenside.
Weitere nichtionische Tenside sind ausgewählt aus der Gruppe bestehend aus

Glycerinmono- und -diester und Sorbitanmono- und -diester von gesättigten und ungesättigten Fettsäuren, Alkylmono- und -oligoglycoside, Partialester auf Basis linearer, verzweigter, ungesättigter bzw. gesättigter Fettsäuren, Ricinolsäure sowie 12-Hydroxystearinsäure und Glycerin, Polyglycerin, Pentaerythrit, Dipentaerythrit, Zuckeralkohole (z.B. Sorbit), Alkylglucoside (z.B. Methylglucosid, Butylglucosid, Laurylglucosid) sowie Polyglucoside (z.B. Cellulose), Mono-, Di- und Trialkylphosphate und deren Salze, Zitronensäureester wie z.B. Glyceryl Stearate Citrate, Glyceryl Oleate Citrate und Dilauryl

Citrate sowie Glyceryl Caprylate, Polyglycerylcaprylate, Polyglycerylcaprate und Mischungen dieser Tenside enthalten.

Sofern die nichtionischen Tenside Polyglycoletherketten enthalten, können diese eine konventionelle, vorzugsweise jedoch eine eingeengte Homologenverteilung aufweisen.

Bevorzugte anionische Tenside sind solche, aufweisend eine Carboxylat-, Sulfat-, Sulfonat-oder Phosphat-Gruppe und einen lipophilen Rest.

Typische Beispiele für anionische Tenside sind Seifen, Alkylbenzolsulfonate, Alkansulfonate, Olefinsulfonate, Alkylethersulfonate, Glycerinethersulfonate, alpha -Methylestersulfonate, Sulfofettsäuren, Alkylsulfate, Alkylethersulfate, perfluorierte Alkansulfonate, perfluorierte Alkansäuren, Fettalkoholethersulfate, Glycerinethersulfate, Fettsäureethersulfate, Hydroxymischethersulfate, Monoglycerid(ether)sulfate, Fettsäureamid(ether)sulfate, Mono- und Dialkylsulfosuccinate, Mono- und Dialkylsulfosuccinamate, Sulfotriglyceride, Amidseifen, Alkylethercarboxylate, Ethercarbonsäuren und deren Salze, Acylsarcosinate Fettsäureisethionate, Fettsäuresarcosinate, Fettsäuretauride, N-Acylaminosäuren, wie beispielsweise Acyllactylate, Acyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate und Mischungen dieser Tenside.

Sofern die anionischen Tenside Polyglycoletherketten enthalten, können diese eine konventionelle, vorzugsweise jedoch eine eingeengte Homologenverteilung aufweisen.

Als kationische Tenside können insbesondere quartäre Ammoniumverbindungen, insbesondere solche, versehen mit mindestens einer linearen und/oder verzweigten, gesättigten oder ungesättigten Alkylkette, eingesetzt werden, so etwa Alkyltrimethylammoniumhalogenide wie z.B. Cetyltrimethylammoniumchlorid oder -bromid oder Behenyltrimethylammoniumchlorid, aber auch Dialkyldimethylammoniumhalogenide wie z.B. Distearyldimethylammoniumchlorid. Weiterhin können als kationische Tenside Monoalkylamidoquats wie z.B. Palmitamidopropyltrimethylammoniumchlorid oder entsprechende Dialkylamidoquats eingesetzt werden.

Weiterhin können als kationische Tenside quartäre Esterverbindungen eingesetzt werden, bei denen es sich um quartäre Fettsäureester auf Basis von Mono-, Di- oder Triethanolamin handeln kann. Weiterhin können auch alkoxylierte und anschließend quartäre Fettamine eingesetzt werden. Kationische Tenside können weiterhin Alkylguanidiniumsalze sein. Typische Beispiele für amphotere Tenside sind Amphoacetate, Amphopropionate, Alkylbetaine, Alkylamidobetaine, Aminopropionate, Aminoglycinate, Imidazoliniumbetaine und Sulfobetaine wie z.B. die N-Alkyl-N,N-dimethylammonium-glycinate, beispielsweise das Kokosalkyldimethylammoniumglycinat, N-Acyl-aminopropyl-N,N-dimethylammoniumglycinate, beispielsweise das Kokosacylaminopropyl-dimethylammoniumglycinat, und 2-Alkyl-3-carboxymethyl-3-hydroxyethyl-imidazoline mit jeweils 8 bis 18 C-Atomen in der Alkyl- oder Acylgruppe sowie das Kokosacylaminoethylhydroxyethylcarboxymethylglycinat. Ein bevorzugtes zwitterionisches Tensid ist das unter der INCI-Bezeichnung Cocamidopropyl Betaine bekannte Fettsäureamid-Derivat.

Da im Herstellungsverfahren der Mikroemulsionen die Anwesenheit eines Lösungsmittels die Herstellung der Emulsion vereinfachen kann, sind bevorzugt eingesetzte Mikroemulsionen der vorliegenden Erfindung dadurch gekennzeichnet, dass zusätzlich ein Lösungsmittel, insbesondere ein organisches Lösungsmittel, d) enthalten.

Dieses Lösungsmittel ist bevorzugt teilweise oder gänzlich wassermischbar, wobei unter dem Begriff "teilweise wassermischbar" eine Löslichkeit bei 25 °C und 1 bar Druck von mindestens 1 Gew.-% des Lösungsmittels in Wasser bezogen auf die Gesamtlösung verstanden wird. Bevorzugte Lösungsmittel sind ausgewählt aus der Gruppe enthaltend, bevorzugt bestehend aus,

Hydrotropen, beispielsweise aus der Gruppe der aliphatischen, linearen und verzweigten Alkohole, wie Ethanol, Propanol, n-Butanol, n-Pentanol oder 1,3-Propandiol, zyklische Carbonate wie Ethylencarbonat, Propylencarbonat, Glycerincarbonat, Ester von Mono- oder Polycarbonsäuren wie Ethylacetat, Ethyllactat, Glycerin, Isopropylalkohol, Dipropylenglykol, Glykolether (beispielsweise unter dem Namen DOWANOL® von Dow Chemicals erhältlich), Glykoletheracetate wie zum Beispiel Methoxypropylacetat, Aldehyde wie zum Beispiel n-Butyraldehyd, Ketonen wie zum Beispiel Aceton, Methylethylketon und Cyclohexanon, Polyethylenglykol Mono- und Dimethylether, Allyl- und Butylalkohol gestartete Polyether und dessen Monomethylether oder Polyole. Polyole, die hier in Betracht kommen, können 2 bis 15 Kohlenstoffatome und mindestens zwei Hydroxylgruppen besitzen. Typische Beispiele sind: Glycerin, Alkylenglycole, wie beispielsweise Ethylenglycol, Diethylenglycol, Propylenglycol, Dipropylenglykol, Butylenglycol, Pentylenglycol, Hexylenglycol, 1,2-Propandiol, 1,2-Butandiol, 1,2-Pentandiol, 1,2-Hexandiol sowie Polyethylenglycol oder Polypropylenglycol, Polyhydroxycarbonsäuren, Butylglykol, Butyldiglykol, Neopentylglykol und Gemische dieser Lösungsmittel.

Die Öl-Phase der erfindungsgemäß eingesetzten Mikroemulsion kann zusätzlich eine Komponente e), Öl oder Ölgemisch, enthalten, welche bevorzugt ausgewählt ist aus der Gruppe enthaltend, bevorzugt bestehend aus Propylenglycol Monocaprylaten, Mono- oder Diestern von linearen und/oder verzweigten Mono- und/oder Dicarbonsäuren mit 2 bis 44 C-Atomen mit linearen und/oder verzweigten gesättigten oder ungesättigten Alkoholen mit 1 bis 22 C-Atomen; sowie Veresterungsprodukte aliphatischer, mono- oder difunktioneller Alkohole mit 2 bis 36 C-Atomen mit monofunktionellen aliphatischen Carbonsäuren mit 1 bis 22 C-Atomen, langkettige Arylsäureester von linearen oder verzweigten, gesättigten oder ungesättigten Alkoholen mit 1 bis 22 C-Atomen, oder auch Benzoesäureisostearylester oder Benzoesäureoctyldocecylester, Monoester (wie z. B. die Methylester und Isopropylester von Fettsäuren mit 12 bis 22 C-Atomen wie z. B. Methyllaurat, Methylstearat, Methyloleat, Methylerucat, Isopropylpalmitat, Isopropylmyristat, Isopropylstearat, Isopropyloleat, n-Butylstearat, n-Hexyllaurat, n-Decyloleat, Isooctylstearat, Isononylpalmitat, Isononylisononanoat, 2-Ethylhexylpalmitat, 2-Ethylhexyllaurat, 2-Hexyldecylstearat, 2-Octyldodecylpalmitat, Oleyloleat, Oleylerucat, Erucyloleat) sowie Ester, die aus technischen aliphatischen Alkoholschnitten und technischen, aliphatischen Carbonsäuregemischen erhältlich sind; sowie natürlich vorkommende Monoester- bzw. Wachsester-Gemische, wie sie z. B. im Jojobaöl oder im Spermöl vorliegen. Geeignete Dicarbonsäureester sind z. B. Di-n-butyl-adipat, Di-n-butyl-sebacat, Di-(2-ethylhexyl)-adipat, Di-(2-hexyldecyl)-succinat, Diisotridecylacelaat. Geeignete Diolester sind z. B. Ethylenglycoldioleat, Ethylenglycol-diisotridecanoat, Propylenglycol-di-(2-ethylhexanoat), Butandiol-di-isostearat, Butandiol-di-caprylat/caprat und Neopentylglycol-di-caprylat. Weitere Fettsäureester, die eingesetzt werden können, sind z. B. C12-15 Alkylbenzoat, Dicaprylylcarbonat, Diethylhexylcarbonat. Ebenso als Ölkomponente können längerkettige Triglyceride, d. h. dreifache Ester des Glycerins mit drei Säuremolekülen, wovon mindestens eine längerkettig ist, eingesetzt werden; weiterhin lineare, verzweigte und zyklische Kohlenwasserstoffe wie Alkane, Leichtbenzin, Testbenzin, Kristallöl, Weissöl, Mineralöl, Kerosin, Terpentinöl, Cyclohexan, Decahydronaphthalen, insbesondere auch flüssige Paraffine und Isoparaffine (bespeilsweise unter dem Namen Isopar® von ExxonMobil Chemical erhaltlich) wie Paraffinöl, Isohexadecan, Polydecen, Vaseline, Paraffinum perliquidum, Squalan, Ceresin; aromatische Kohlenwasserstoffe wie zum Beispiel Toluol, Xylol und naphthenische Öle (Beispielsweise unter dem Namen SOLVESSO® von ExxonMobil Chemical erhältlich); sowie lineare oder verzweigte Alkohole und Fettalkohole mit 6 oder mehr Kohlenstoffatomen wie beispielsweise n-Hexanol, n-Oktanol, Oleylalkohol oder Octyldodecanol und Fettalkoholether wie Dicaprylyl Ether; Siliconöle und -wachse wie z. B. Polydimethylsiloxane, Cyclomethylsiloxane, sowie aryl- oder alkyl- oder alkoxy-substituierte Polymethylsiloxane oder Cyclomethylsiloxane, Guerbetalkohole auf Basis von Fettalkoholen mit 6 bis 18, vorzugsweise 8 bis 10 Kohlenstoffatomen, Ester von linearen C6-C22-Fettsäuren mit linearen C6-C22-Fettalkoholen, Ester von verzweigten C6-C13-Carbonsäuren mit linearen C6-C22-Fettalkoholen, Ester von linearen C6-C22-Fettsäuren mit verzweigten C8-C18-Alkoholen, insbesondere 2-Ethylhexanol oder Isononanol, Ester von verzweigten C6-C13-Carbonsäuren mit verzweigten Alkoholen, insbesondere 2-Ethylhexanol oder Isononanol, Ester von linearen und/oder verzweigten Fettsäuren mit mehrwertigen Alkoholen (wie z. B. Propylenglycol, Dimerdiol oder Trimertriol) und/oder Guerbetalkoholen, Triglyceride auf Basis C6-C10-Fettsäuren, flüssige Mono-/Di-/Triglyceridmischungen auf Basis von C6-C18-Fettsäuren, Ester von C6-C22-Fettalkoholen und/oder Guerbetalkoholen mit aromatischen Carbonsäuren, insbesondere Benzoesäure, pflanzliche Öle, verzweigte primäre Alkohole, substituierte Cyclohexane, lineare C6-C22-Fettalkoholcarbonate, Guerbetcarbonate, Ester der Benzoesäure mit linearen und/oder verzweigten C6-C22-Alkoholen (z. B. Finsolv™ TN), Dialkylether, Ringöffnungsprodukte von epoxidierten Fettsäureestern mit Polyolen, Siliconöle und/oder aliphatische bzw. naphthenische Kohlenwasserstoffe.

In diesem Zusammenhang gilt die Maßgabe, dass die Komponente e) maximal 50 Gew.-% der gesamten Ölphase bestehend aus Polysiloxan beinhaltend mindestens eine quartäre Ammoniumgruppe und e) ausmacht.

Die Wasser-Phase der erfindungsgemäß eingesetzten Mikroemulsion kann zusätzlich eine Komponente f), mindestens ein Salz enthalten. Das Kation des Salzes ist bevorzugt ausgewählt aus der Gruppe enthaltend, bevorzugt bestehend aus Alkalimetallionen (wie z.B. Natrium), Erdalkalimetallionen (wie zB Magnesium), quaternäre stickstoffhaltige Ionen (z.B. Ammonium, Tetramethylammonium), Übergangsmetallionen (z.B. Eisen) und Aluminium. Das Anion des Salzes ist bevorzugt ausgewählt aus der Gruppe enthaltend, bevorzugt bestehend aus Hydroxid, Oxid, Fluorid, Chlorid, Bromid, Iodid, Sulfid, Sulfonat, Hydrogensulfat und Sulfat, Hydrogencarbonat und Carbonat, Monohydrogenphosphat, Dihydrogenphosphat und Phosphat, Nitrat und die Anionen von organischen Säuren (wie z.B. Acetat und Lactat).

In erfindungsgemäß bevorzugt eingesetzten Mikroemulsionen ist das Polysiloxan beinhaltend mindestens eine quartäre Ammoniumgruppe in einer Menge von 10 Gew.-% bis 60 Gew.-%, bevorzugt in einer Menge von 15 Gew.-% bis 50 Gew.-%, besonders bevorzugt in einer Menge von 20 Gew.-% bis 45 Gew.-% enthalten, wobei sich die Gew.-% auf die Gesamtmikroemulsion beziehen.

Besonders bevorzugt eingesetzte Mikroemulsionen der vorliegenden Erfindung sind dadurch gekennzeichnet, dass

das Polysiloxan beinhaltend mindestens eine quartäre Ammoniumgruppe in einer Menge von 10 Gew.-% bis 60 Gew.-%, bevorzugt in einer Menge von 15 Gew.-% bis 50 Gew.-%, besonders bevorzugt in einer Menge von 18 Gew.-% bis 45 Gew.-%,

Komponente a) in einer Menge von 3 Gew.-% bis 40 Gew.-%, bevorzugt in einer Menge von 4 Gew.-% bis 20 Gew.-%, besonders bevorzugt in einer Menge von 5 Gew.-% bis 15 Gew.-%,

Komponente b) in einer Menge von 0 Gew.-% bis 30 Gew.-%, bevorzugt in einer Menge von 3 Gew.-% bis 25 Gew.-%, besonders bevorzugt in einer Menge von 5 Gew.-% bis 20 Gew.-%,
Komponente c) in einer Menge von 10 Gew.-% bis 75 Gew.-%, bevorzugt in einer Menge von 15 Gew.-% bis 65 Gew.-%, besonders bevorzugt in einer Menge von 20 Gew.-% bis 55 Gew.-%,
Komponente d) in einer Menge von 0 Gew.-% bis 35 Gew.-%, bevorzugt in einer Menge von 3 Gew.-% bis 30 Gew.-%, besonders bevorzugt in einer Menge von 5 Gew.-% bis 25 Gew.-%,
Komponente e) in einer Menge von 0 Gew.-% bis 50 Gew.-%, bevorzugt in einer Menge von 1 Gew.-% bis 40 Gew.-%, besonders bevorzugt in einer Menge von 5 Gew.-% bis 20 Gew.-% der gesamten Öl-Phase bestehend aus Polysiloxan beinhaltend mindestens eine quartäre Ammoniumgruppe und e),
Komponente f) in einer Menge von 0 Gew.-% bis 10 Gew.-%, bevorzugt in einer Menge von 0,01 Gew.-% bis 5 Gew.-%, besonders bevorzugt in einer Menge von 0,1 Gew.-% bis 3 Gew.-%,
enthalten ist, wobei sich die Gew.-% außer im Falle von Komponente e) auf die Gesamtmikroemulsion beziehen.

In Verfahrensschritt 1.) des erfindungsgemäßen Verfahrens werden bevorzugt Mikroemulsionen eingesetzt, die solche Polysiloxane enthalten, die oben als bevorzugte, in den erfindungsgemäßen Beschichtungsmitteln enthaltene Polysiloxane genannt sind.

Härtbare Beschichtungsmittel erhältlich nach dem vorgenannten, erfindungsgemäßen Verfahren sind ebenfalls Gegenstand der vorliegenden Erfindung.

Ein weiterer Gegenstand der vorliegenden Erfindung ist ein Verfahren zur Herstellung von Beschichtungen umfassend die Verfahrensschritte:

1.) Bereitstellen einer wässrigen Emulsion, insbesondere einer Mikroemulsion, enthaltend mindestens ein lineares oder zyklisches Polysiloxan beinhaltend mindestens eine quartäre Ammoniumgruppe,
2.) Einbringen der wässrigen Emulsion in ein härtbares Beschichtungsmittel,
3.) Auftragen des Beschichtungsmittels auf einem Substrat, und
4.) Härten des Beschichtungsmittels.

Das Verfahren zur Herstellung von Beschichtungen ist in den ersten beiden Verfahrensschritten identisch mit den ersten beiden Verfahrensschritten des erfindungsgemäßen Verfahrens zur Herstellung von Beschichtungsmitteln.

Entsprechend werden in dem erfindungsgemäßen Verfahren zur Herstellung von Beschichtungen auch bevorzugte Gegenstände des erfindungsgemäßen Verfahrens zur Herstellung von Beschichtungsmitteln bevorzugt eingesetzt.

In Verfahrensschritt 3.) der erfindungsgemäßen Verfahren wird das Beschichtungsmittel auf einem Gegenstand oder Substrat aufgetragen. Als Substrat sind grundsätzlich alle Oberflächen geeignet. Bevorzugte Beispiele von Substraten sind Textil, Papier, Gummi, Kunststoff, Holz oder Leder. All diese Substrate können schon ein- oder mehrmals beschichtet sein, so dass das erfindungsgemäße Beschichtungsmittel auf eine schon existierende Beschichtung aufgetragen wird, womit wiederum das eigentliche Substrat beschichtet wurde. Die Auftragung selbst kann beispielweise sowohl durch Pinseln als auch durch Rollen, Walzen, Sprühen, Fluten, Ziehen, Tauchen, Wischen, Giessen, Rakeln und Streichen erfolgen.

In Verfahrensschritt 4.) des erfindungsgemäßen Verfahrens werden die Beschichtungsmittel getrocknet und, im Falle von nachvernetzbaren Bindemitteln, ausgehärtet.

Die physikalische Trocknung durch Verdunstung von Wasser erfolgt bevorzugt in einem Temperaturbereich von 0 °C bis 200 °C, bevorzugt von 10 °C bis 100 °C, besonders bevorzugt von 15 °C bis 60 °C. Es kann vorteilhaft sein, die Härtung durch Trocknung mit Mikrowellen durchzuführen. Die Nachvernetzung kann chemisch erfolgen, durch Zugabe eines geeigneten Vernetzers und/oder Katalysators kurz vor der Verarbeitung, thermisch, durch Reaktion von bei Raumtemperatur unreaktiven, im Bindemittel kovalent eingebundenen Gruppen, oder durch Strahlung. Im letzten Fall müssen Gruppen, zum Beispiel ethylenisch ungesättigte Gruppen, im Polymergerüst eingebaut sein, die durch Strahlung, eventuell unter den Einfluss eines Photoinitiators, miteinander reagieren.

Beispiele von geeigneten Vernetzern und/oder Katalysatoren sind Melamin- und Aminoharzen, Harnstoffharzen, Epoxidharzen, (Poly)Glycidylethern, blockierte und nicht-blockierte (Poly)Isocyanaten, (Poly)Isocyanurate, (Poly)Aziridinen, (Poly)Carbodiimiden, (Poly)Siloxanen, Ketoester, Ketoamiden, 1,3-Diketonen, Ketomethylenarylverbindungen, Di- und Polyaminen, Di-und Polyolen und Säuren, zum Beispiel p-Toluolsulfonsäure. Die optimale Konzentration ist vom Bindemittel abhängig und muss für jede Lackformulierung einzeln ermittelt werden. Die Nachvernetzung kann sowohl bei Raumtemperatur als auch bei höheren Temperaturen erfolgen. Im Falle von Alkydharzen wird eine Nachvernetzung durch Reaktion mit Luftsauerstoff erreicht, in der Regel unter Einfluss von Katalysatoren ("Trockner").

Ein Beispiel von Bindemitteln die thermisch nachvernetzt werden sind Polyurethandispersionen mit blockierten Isocyanatgruppen. Die Blockierung kann beispielsweise durch Reaktion der Isocyanatgruppe mit einem Blockierungsmittel oder durch Dimerisierung der Isocyanatgruppen zu Uretdionen zustande kommen. Eine weitere, wichtige Klasse von thermisch nachvernetzenden Bindemitteln sind die Melamin-Formaldehydharze, die bei höheren Temperaturen eingebrannt werden und nachvernetzen unter Abspaltung von beispielsweise Methanol.

Im Falle von durch Licht, insbesondere UV-Licht, härtbaren Beschichtungsmitteln wird die Formulierung mit einem Photoinitiator oder Mischung aus Photoinitiatoren versetzt. Die optimale Wahl des Photoinitiators beziehungsweise optimale Mischung aus Photoinitiatoren und deren Konzentration ist von der jeweiligen Formulierung abhängig. Bevorzugt werden 1 bis 4% Photoinitiator bezogen auf der gesamte Lackformulierung eingesetzt. Die Reaktion erfolgt bei Raumtemperatur.

Ein weiterer Gegenstand der vorliegenden Erfindung ist eine Beschichtung erhältlich nach dem erfindungsgemäßen Verfahren zur Herstellung von Beschichtungen.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

Folgende Abbildungen sind Bestandteil der Beispiele:
Abbildung 1: Repräsentative Gleitwert-Messkurven

Beispiele:

*Siloxan 1: Lineares Polysiloxan-Quat mit N=50:*

1a. Herstellung eines Epoxysiloxanes

In einem 250 ml Vierhalskolben, versehen mit Rührer, Tropftrichter, Thermometer und Rückflusskühler, werden 12,20 g Allylglycidether zusammen mit 10 ppm (NH3)2PtCl2 unter Stickstoffatmosphäre auf 115 °C erwärmt. Hierzu werden innerhalb 15 Minuten 150 g eines $\alpha,\omega$ - Wasserstoffsiloxan der allgemeine Formel

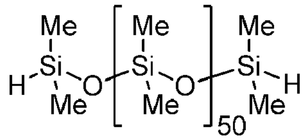

Getropft. Das Reaktionsgemisch wird weitere 3 Stunden bei 115 °C gerührt, anschließend wird der überschüssige Allylglycidether bei 0,2 bar und 100 °C abdestilliert. Erhalten: 156 g eines $\alpha,\omega$ - Diepoxysiloxan (Epoxywert: 0,87 %) der allgemeinen Formel

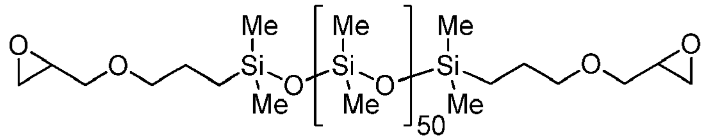

1 b. Umsetzung zum Silikonquat

In einem 250 ml Dreihalskolben wurden 17,1 g 3-N,N-Dimethyl-aminopropyl-laurylsäureamid, 3,4 g Essigsäure und 6.3 g Tripropylenglykolmonomethylether bei Raumtemperatur gerührt. Anschließend wurden 100 g der gemäß 1a hergestellten Verbindung zugetropft. Anschließend wurde 6 Stunden bei 80 °C gerührt. Erhalten: 126 g polyquartäres Polysiloxan-Polymer, hochviskose gelbe Flüssigkeit, welches durch die folgende statistische Formel beschrieben wird:

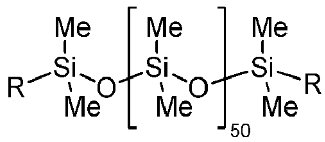

R = 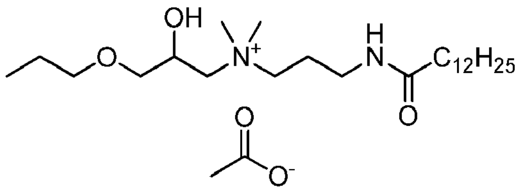 .

*Siloxan 2: Lineares Polysiloxan-Quat mit N=80:*

2a. Herstellung eines Epoxysiloxanes

In einem 250 ml Vierhalskolben, versehen mit Rührer, Tropftrichter, Thermometer und Rückflusskühler, werden 8,9 g Allylglycidether zusammen mit 10 ppm (NH3)2PtCl2 unter Stickstoffarmosphäre auf 115 °C erwärmt. Hierzu werden innerhalb 15 Minuten 152 g eines $\alpha,\omega$ - Wasserstoffsiloxan der allgemeine Formel

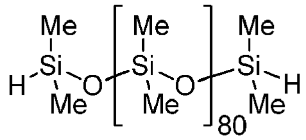

Getropft. Das Reaktionsgemisch wird weitere 3 Stunden bei 115 °C gerührt, anschließend wird der überschüssige Allylglycidether bei 0,2 bar und 100 °C abdestilliert. Erhalten: 156 g eines $\alpha,\omega$ - Diepoxysiloxan (Epoxywert: 0,58 %) der allgemeinen Formel

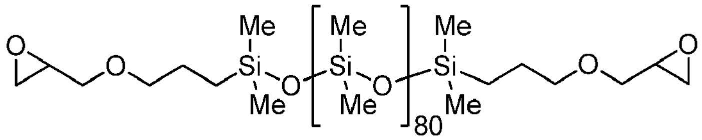

2b. Umsetzung zum Silikonquat

In einem 250 ml Dreihalskolben wurden 13,6 g 3-N,N-Dimethyl-aminopropyl-laurylsäureamid, 2,6 g Essigsäure und 14 g Isopropanol bei Raumtemperatur gerührt. Anschließend wurden 120 g der gemäß 2a hergestellten Verbindung zugetropft. Anschließend wurde 6 Stunden bei 80 °C gerührt und destilliert. Erhalten: 136 g polyquartäres Polysiloxan-Polymer, hochviskose gelbe Flüssigkeit, welches durch die folgende statistische Formel beschrieben wird:

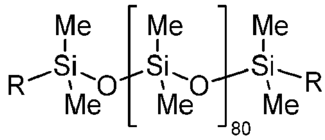

R = 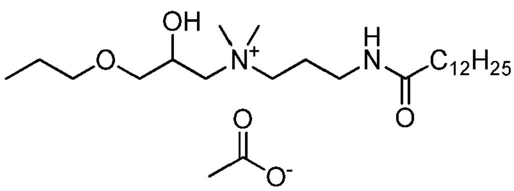

*Siloxan 3: Lineares Polysiloxan-Quat mit N=250:*

3a. Herstellung eines Epoxysiloxanes

In einem 500 ml Vierhalskolben, versehen mit Rührer, Tropftrichter, Thermometer und Rückflusskühler, werden 9 g Allylglycidether zusammen mit 10 ppm (NH3)2PtCl2 unter Stickstoffatmosphäre auf 115 °C erwärmt. Hierzu werden

innerhalb 15 Minuten 443 g eines α,ω - Wasserstoffsiloxan der allgemeinen Formel

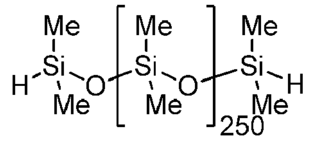

getropft. Das Reaktionsgemisch wird weitere 3 Stunden bei 115 °C gerührt, anschließend wird der überschüssige Allylglycidether bei 0,2 bar und 100 °C abdestilliert. Erhalten: 440 g eines α,ω - Diepoxysiloxan (Epoxywert: 0,19 %) der allgemeinen Formel

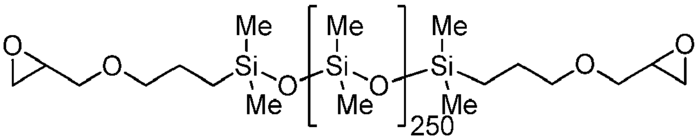

3b. Umsetzung zum Silikonquat

In einem 500 ml Dreihalskolben wurden 16,3 g 3-N,N-Dimethyl-aminopropyl-laurylsäureamid, 5,6 g Milchsäure und 58 g Isopropanol bei Raumtemperatur gerührt. Anschließend wurden 440 g der gemäß 3a hergestellten Verbindung zugetropft. Anschließend wurde 6 Stunden bei 80 °C gerührt und destilliert. Erhalten: 461 g polyquartäres Polysiloxan-Polymer, hochviskose gelbe Flüssigkeit, welches durch die folgende statistische Formel beschrieben wird:

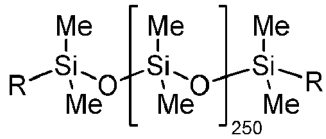

R =

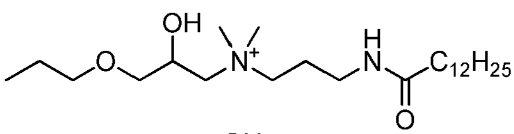

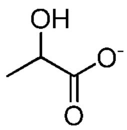

*Siloxan 4: Lineares Polysiloxan-Quat mit N=80:*

4a. Herstellung eines Epoxysiloxanes

In einem 250 mL Vierhalskolben, versehen mit Rührer, Tropftrichter, Thermometer und

Rückflusskühler, werden 8,9 g Allylglycidether zusammen mit 10 ppm (NH3)2PtCl2 unter Stickstoffarmosphäre auf 115 °C erwärmt. Hierzu werden innerhalb 15 Minuten 152 g eines α,ω - Wasserstoffsiloxan der allgemeine Formel

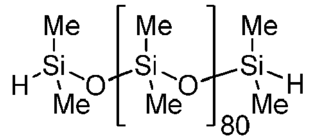

getropft. Das Reaktionsgemisch wird weitere 3 Stunden bei 115 °C gerührt, anschließend wird der überschüssige Allylglycidether bei 0,2 bar und 100 °C abdestilliert. Erhalten: 156 g eines α,ω - Diepoxysiloxan (Epoxywert: 0,58 %) der allgemeine Formel

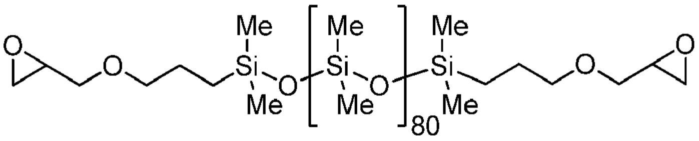

4b. Umsetzung zum Silikonquat

In einem 250 mL Dreihalskolben wurden 10 g N-(3 Dimethylaminopropyl)octadecanamide, 1,7 g Essigsäure und 15 g Isopropanol bei Raumtemperatur gerührt. Anschließend wurden 73 g der gemäß 4a hergestellten Verbindung zugetropft. Anschließend wurde 6 Stunden bei 80 °C gerührt und destilliert. Erhalten: 97 g polyquaternäres Polysiloxan-Polymer, hochviskose gelbe Flüssigkeit, welches durch die folgende statistische Formel beschrieben wird:

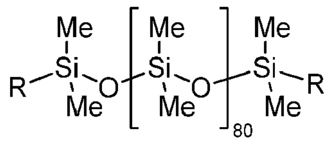

R = 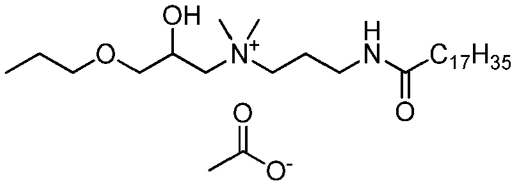

*Siloxan 5: Lineares Polysiloxan-Quat mit N=80:*

5a. Herstellung eines Epoxysiloxanes

In einem 250 mL Vierhalskolben, versehen mit Rührer, Tropftrichter, Thermometer und Rückflusskühler, werden 8,9 g Allylglycidether zusammen mit 10 ppm (NH3)2PtCl2 unter Stickstoffarmosphäre auf 115 °C erwärmt. Hierzu werden innerhalb 15 Minuten 152 g eines α,ω - Wasserstoffsiloxan der allgemeine Formel

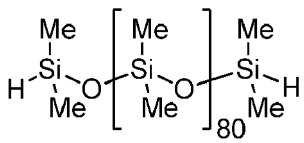

getropft. Das Reaktionsgemisch wird weitere 3 Stunden bei 115 °C gerührt, anschließend wird der überschüssige Allylglycidether bei 0,2 bar und 100 °C abdestilliert. Erhalten: 156 g eines α,ω - Diepoxysiloxan (Epoxywert: 0,58 %) der allgemeine Formel

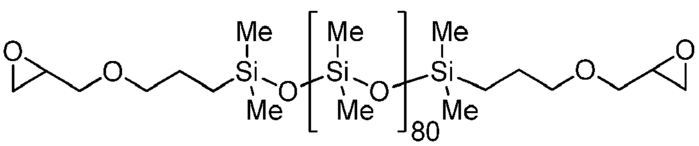

5b. Umsetzung zum Silikonquat

In einem 250 mL Dreihalskolben wurden 7,9 g 3-N,N-Dimethyl-aminoethyl-laurylsäureamid, 1,7 g Essigsäure und 15 g Isopropanol bei Raumtemperatur gerührt. Anschließend wurden 75 g der gemäß 5a hergestellten Verbindung zugetropft. Anschließend wurde 6 Stunden bei 80 °C gerührt und destilliert. Erhalten: 98 g polyquaternäres Polysiloxan-Polymer, hochviskose gelbe Flüssigkeit, welches durch die folgende statistische Formel beschrieben wird:

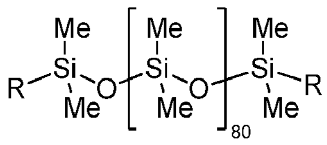

R = 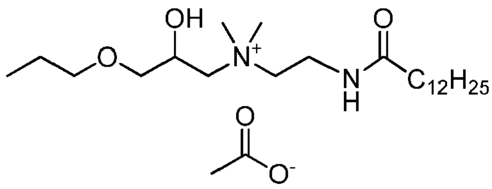

*Mikroemulsionen:*

| Bestandteil / Gew.-% | ME1 | ME2 | ME3 | ME4 |
|---|---|---|---|---|
| Siloxan 2 | 20,0 | 22,1 | 19,4 | 21,2 |
| Tego Alkanol TD6, Evonik Industries (Isotridecyl-6-ethoxylat) | 6,0 | 11,4 | 5,8 | |
| Lutensol TO12, BASF (Isotridecyl-12-ethoxylat) | 6,0 | | 5,8 | |
| Tego Twin 4100, Evonik Industries (Organomodifiziertes Siloxan) | | | 2,9 | |
| Tego Wet 240, Evonik Industries (Trisiloxan) | | | | 10,9 |
| Isopropanol | | | | 4,2 |
| Wasser | 68,0 | 66,5 | 66,1 | 63,7 |

| Bestandteil / Gew.-% | ME5 | ME6 | ME7 | ME8 | ME9 |
|---|---|---|---|---|---|
| Siloxan 1 | | 20,4 | | | 30,7 |
| Siloxan 3 | 18,9 | | 22,1 | 38,8 | |
| Tego Alkanol TD6 (Isotridecyl-6-ethoxylat) | 14,8 | 12,0 | 35,4 | 19,1 | 27,6 |
| Isopropanol | 11,5 | 8,4 | | | |
| Dipropylenglykol | | | 11,4 | 15,5 | 15,1 |
| Wasser | 54,8 | 59,2 | 31,1 | 26,6 | 26,6 |

| Bestandteil / Gew.-% | ME10 | ME11 | ME12 | ME13 |
|---|---|---|---|---|
| Siloxan 2 | 35,7 | 26,8 | 23,7 | 26,5 |
| Varisoft 300, Evonik Industries (Cetyltrimethylammoniumchlorid) | 7,3 | 13,6 | 4,7 | 11,0 |
| Dermosoft GMCY, Dr Straetmans (Glyceryl Monocaprylat) | | | 9,6 | |
| Capryol 90, Gattefosse (Propylene Glycol Monocaprylate) | | 5,9 | | 10,5 |
| Butyldiglykol | 3,8 | 13,4 | | |
| Propylenglykol | | | 18,9 | 15,6 |
| Wasser | 53,2 | 40,3 | 43,1 | 36,4 |

| Bestandteil / Gew.-% | ME14 | ME15 | ME16 | ME17 |
|---|---|---|---|---|
| Siloxan 2 | 27,4 | 19,8 | 19,7 | 30,0 |
| Betain F50, Evonik Industries (Cocamidopropylbetain) | 11,4 | | | |
| Tegotens SD100, Evonik Industries (Sorbitansesquicaprylate) | 5,5 | | | 10,0 |
| Varisoft PATC, Evonik Industries (Palmitamidopropyltrimethylammonium Chlorid) | | | | 2,0 |
| Imbentin U-050, Kolb (Undecyl-5-ethoxylat) | | 9,2 | 9,4 | |
| Propylenglykol | 8,7 | | | |
| Butyldiglykol | | | | 15,0 |
| Wasser | 47,0 | 71,0 | 70,9 | 43,0 |

| Bestandteil / Gew.-% | ME18 | ME19 | ME20 | ME21 |
|---|---|---|---|---|
| Siloxan 4 | | 31,5 | 20,0 | 20,8 |
| Siloxan 5 | 39,0 | | | |
| Tego Alkanol TD6, Evonik Industries (Isotridecyl-6-ethoxylat) | 19,5 | 27,8 | 6,0 | 6,2 |
| Lutensol TO12, BASF (Isotridecyl-12-ethoxylat) | | | 6,0 | 6,0 |
| Tego Twin 4100, Evonik Industries (Organomodifiziertes Siloxan) | | | | 3,2 |
| Dipropylenglykol | 15,6 | 15,1 | | |
| Wasser | 25,9 | 25,6 | 68,0 | 63,8 |

| Bestandteil / Gew.-% | ME22 | ME23 |
|---|---|---|
| Siloxan 4 | 24,0 | |
| Siloxan 5 | | 26,0 |
| Varisoft 300, Evonik Industries (Cetyltrimethylammoniumchlorid) | 5,0 | 11,5 |
| Dermosoft GMCY, Dr Straetmans (Glyceryl Monocaprylat) | 10,0 | |
| Capryol 90, Gattefosse (Propylene Glycol Monocaprylate) | | 10,5 |
| Propylenglykol | 19,0 | 15,6 |
| Wasser | 42 | 36,4 |

*Beschichtungsmittel:*

Formulierungsbeispiel 1) Topcoat, physikalisch trocknend

| Bestandteil | Gew.-% |
|---|---|
| Bayderm Finish 91 DU, Lanxess | 54,0% |
| Wasser | 45,0% |
| TEGO® Viskoplus 3030, Evonik Industries | 1,0% |

Formulierungsbeispiel 2) UV-Möbellack, nicht physikalisch trocknend

| Bestandteil | Gew.-% |
|---|---|
| Ucecoat 7710, Cytec | 98,0 |
| Irgacure 500, BASF | 2,0 |

Formulierungsbeispiel 3) Parkettlack I

| Bestandteil | Gew.-% |
|---|---|
| APU 10610, Alberdingk Boley | 85,5 |
| Butyldiglycol | 2,0 |
| Dowanol TBnB | 4,0 |
| Wasser | 8,3 |
| Coatex BR 125 P, Arkema | 0,2 |

Formulierungsbeispiel 4) Parkettlack II

| Bestandteil | Gew.-% |
|---|---|
| AC 2714, Alberdingk Boley | 80,0 |
| Dowanol DPnP | 5,0 |
| Dowanol DPM | 5,0 |
| Wasser | 9,6 |
| DSX 1514, BASF | 0,4 |

Formulierungsbeispiel 5) Kunststoff Basislack

| Bestandteil | Gew.-% |
|---|---|
| APU 10120, Alberdingk Boley | 18,0 |
| APU 10160, Alberdingk Boley | 9,0 |
| TEGO Foamex 805 | 0,3 |
| Viscalex HV 30 (4%ige wässrige Lösung mit AMP90 auf pH 8 neutralisiert) | 63,4 |
| AMP 90 | 0,3 |
| VE-Wasser | 9,0 |

*Beschichtungen:*

100 Gram Lack zusammen mit dem zu prüfenden Additiv wurden in einem 180 ml Polyethylen-Becher (0 6 cm) abgewogen und anschließend mit einem Dispermaten mit einer Zahnscheibe (0 3 cm) durch 3 Minuten Rühren bei

1500 Upm homogenisiert. Die Mengen Additiv beziehen sich immer auf das Siloxan. Nach 24 Stunden Verweilzeit wird der Lack auf schwarzer, mattierter PVC Folie (System Leneta ®, 43 x 28 cm) mit Hilfe eines 100 µm Spiralrakels appliziert. Anschließend wird die Beschichtung über 24 Stunden bei Raumtemperatur getrocknet. Zum Vergleich mit den erfindungsgemäßen Mikroemulsionen wurde ein handelsübliches Standardprodukt namens TEGO Glide 410 verwendet. Es handelt sich hierbei um ein wasserdispergierbares, organomodifiziertes Siloxan mit einem Aktivgehalt von 100%. Die Qualität der Aufzüge wurde visuell auf einer Skala von 1 bis 5 nach der Anzahl von Fehlstellen benotet.

Beurteilung Qualität Aufzüge

| Anzahl Fehlstellen | Note |
|---|---|
| 0-1 | 5 |
| 1-3 | 4 |
| Um 5 | 3 |
| Um 10 | 2 |
| Deutlich über 10 | 1 |

*Ausprüfung Slip:*

Die Gleitwerte wurden auf PVC-Folie mit einem Instron 3300 Gerät (Instron Deutschland GmbH, Pfungstadt, Deutschland) gemessen. Das Gerät misst die Kraft, die nötig ist, um einen Schlitten über die beschichtete Folie zu ziehen. Der zylinderförmige Schlitten von 500 Gramm Gewicht und einer Kontaktoberfläche von 12,6 $cm^2$ wurde dabei mit einer Filz-Oberfläche ausgestattet, wobei diese Oberfläche für jede Messung erneuert wird. Anschließend wird so lange (mit zunehmender Kraft) an dem Schlitten gezogen bis er sich mit einer Geschwindigkeit von 6 mm/s bewegt. Es wird also die Zugkraft (Last) gemessen, die notwendig ist um den Schlitten zu bewegen.

*Ausprüfung Antiblocking:*

Das Anti-Blocking Verhalten von den Formulierungen 2, 3 und 4 wurde mit Hilfe eines Osimeters bestimmt. Zwei 5x5 cm große Stücke beschichtete Leneta-Folie wurden eingespannt mit den beschichteten Seiten gegeneinander. Anschließend wurden die Folien gegeneinander gepresst mit einem Druck von 70 Kp auf 25 $cm^2$. Das Osimeter wurde nachher mitsamt Folien über 24 Stunden im Ofen bei 50 °C gestellt. Anschließend werden die Folien voneinander getrennt. Das Anti-Blocking wird bewertet auf einer Skala von 1 bis 5 anhand der Leichtigkeit mit dem die Folien sich trennen lassen und die Beschädigung der Lackoberflächen. Eine unbeschädigte Oberfläche ohne merkbares Verblocken wurde mit 5 bewertet. Eine stark beschädigte Oberfläche und starkes Verblocken dagegen mit 1.

Zusammenfassung der Ergebnisse

Topcoat, physikalisch trocknend:

| Additiv | % | Aufzug | Slip / cN | Stick-slip | Griff |
|---|---|---|---|---|---|
| **Nullprobe** | -- | 5 | 260 | Ja | Gummiartig |
| **ME1** | 0,3 | 4 | 119 | Nein | Samtig |
| **ME3** | 0,3 | 5 | 123 | Nein | Samtig |
| **ME1** | 0,6 | 3 | 118 | Nein | Samtig |
| **ME3** | 0,6 | 5 | 121 | Nein | Samtig |
| **ME6** | 0,3 | 4 | 145 | Nein | Samtig |
| **ME6** | 0,6 | 4 | 139 | Nein | Samtig |

(fortgesetzt)

| Additiv | % | Aufzug | Slip / cN | Stick-slip | Griff |
|---|---|---|---|---|---|
| **ME7** | 0,3 | 5 | 112 | Nein | Samtig |
| **ME7** | 0,6 | 4 | 109 | Nein | Samtig |
| **ME18** | 0,3 | 5 | 125 | Nein | Samtig |
| **ME18** | 0,6 | 3 | 119 | Nein | Samtig |
| **ME20** | 0,3 | 4 | 117 | Nein | Samtig |
| **ME20** | 0,6 | 4 | 118 | Nein | Samtig |

Die Zugabe von 0,3 bis 0,6% der Proben ME1, ME3, ME6, ME7, ME18 oder ME20 bezogen auf Aktivgehalt führt zu einer deutlichen Reduktion der Slipwerte. Die Nullprobe zeigt Stickslip, d.h. eine regelmäßige Fluktuation der Zuglast. Die additivierten Proben dagegen zeigen das nicht. Abbildung 1 zeigt einige representative Messkurven. Die Qualität des Aufzuges von der Probe mit ME3 ist mit der Nullprobe vergleichbar. Zur Beurteilung des Griffes hat eine erfahrene Testperson die auf Leneta aufgezogenen Beschichtungen qualitativ bewertet. Testperson bezeichnet Probe 1 als gummiartig. Die mit einer Mikroemulsion additivierten Proben dagegen werden als samtig empfunden.

UV Möbellack, nicht physikalisch trocknend:

| Additiv | % WS | Aufzug | Slip / cN | Anti-blocking |
|---|---|---|---|---|
| Nullprobe | - | 3 | 368 | 3 |
| Glide 410 | 0,3 | 3-4 | 54 | 4 |
| ME 1 | 0,3 | 2 | 38 | 5 |

Die Zugabe von 0,3% der Probe ME1 führt zu einer sehr starken Reduktion der Gleitwerte und eine Verbesserung des Anti-Blocking, sowohl gegenüber der Nullprobe als auch gegenüber dem nicht erfindungsgemäßen Referenzprodukt Glide 410.

Parkettlack I:

| Additiv | % WS | Aufzug | Slip / cN | Anti-blocking |
|---|---|---|---|---|
| Nullprobe | - | 4 | 159 | 3 |
| Glide 410 | 0,3 | 4 | 128 | 3 |
| ME 1 | 0,3 | 4 | 110 | 4 |

Die Zugabe von 0,3% der Probe ME1 führt zu einer Reduktion der Gleitwerte und eine Verbesserung des Anti-Blocking, sowohl gegenüber der Nullprobe als auch gegenüber dem nicht erfindungsgemäßen Referenzprodukt Glide 410.

Parkettlack II:

| Additiv | % WS | Aufzug | Slip / cN | Anti-blocking |
|---|---|---|---|---|
| Nullprobe | - | 3-4 | 262 | 4 |

(fortgesetzt)

| Additiv | % WS | Aufzug | Slip / cN | Anti-blocking |
|---|---|---|---|---|
| Glide 410 | 0,3 | 4 | 90 | 4 |
| ME 1 | 0,3 | 3 | 90 | 5 |

Die Zugabe von 0,3% der Probe ME1 führt zu einer Reduktion der Gleitwerte im Vergleich zur Nullprobe, und eine Verbesserung des Anti-Blocking, sowohl gegenüber der Nullprobe als auch gegenüber dem nicht erfindungsgemäßen Referenzprodukt Glide 410.

Kunststoff Basislack:

| Additiv | % WS | Aufzug | Slip / cN |
|---|---|---|---|
| Nullprobe | - | 5 | 262 |
| Glide 410 | 0,1 | 4-5 | 181 |
| Glide 410 | 0,5 | 4-5 | 108 |
| ME 1 | 0,1 | 4 | 146 |
| ME 1 | 0,5 | 4 | 95 |

Die Zugabe von entweder 0,1% oder 0,5% der Probe ME1 führt zu einer Reduktion der Gleitwerte sowohl im Vergleich zur Nullprobe als auch gegenüber dem nicht erfindungsgemäßen Referenzprodukt Glide 410.

## Patentansprüche

1. Härtbares Beschichtungsmittel enthaltend

   A) mindestens ein lineares oder zyklisches Polysiloxan beinhaltend mindestens eine quartäre Ammoniumgruppe.

2. Beschichtungsmittel gemäß Anspruch 1, **dadurch gekennzeichnet, dass** das mindestens eine Polysiloxan ein lineares ist, bei dem die mindestens eine quartäre Ammoniumgruppe $\alpha,\omega$-ständig ist.

3. Beschichtungsmittel gemäß Anspruch 1 oder 2, **dadurch gekennzeichnet, dass** das Polysiloxan ausgewählt ist aus der Gruppe Polysiloxane der allgemeinen Formel I)

$$M_aM'_{a1}M''_{a2}M'''_{a3}D_b \qquad \text{allgemeine Formel I)}$$

   wobei
   $M = (R^1_3SiO_{1/2})$
   $M' = (R^2R^1_2SiO_{1/2})$
   $M'' = (R^3R^1_2SiO_{1/2})$
   $M''' = (R^4R^1_2SiO_{1/2})$
   $D = (R^1_2\ Si\ O_{2/2})$
   a = 0 bis 1;
   a1 = 0 bis 1;
   a2 = 0 bis 1;
   a3 = 0 bis 2, bevorzugt 2;
   mit der Maßgabe, dass
   a + a1 + a2 + a3 = 2;
   b = 1 bis 500, bevorzugt 10 bis 400, besonders bevorzugt 20 bis 300;

$R^1$ = unabhängig voneinander gleiche oder verschiedene lineare oder verzweigte, gegebenenfalls aromatische Kohlenwasserstoffreste mit 1 bis 30 Kohlenstoffatomen, bevorzugt Methyl oder Phenyl, insbesondere Methyl;
$R^2$ = unabhängig voneinander gleiche oder verschiedene Alkoxy- oder Acyloxyreste, wie beispielsweise Methoxy-, Ethoxy-, n-Propoxy oder iso-Propoxyreste, Acetoxy, Hydroxy insbesondere Ethoxy oder iso-Propoxyreste;
$R^3$ = unabhängig voneinander gleiche oder verschiedene organische Epoxy-Reste;
$R^4$ = unabhängig voneinander gleiche oder verschiedene organische Reste, die quartäre Ammoniumfunktionen tragen;

**4.** Beschichtungsmittel gemäß mindestens einem der vorherigen Ansprüche, **dadurch gekennzeichnet, dass** es enthält

B) eine oder mehrere Bindemittel-Komponente.

**5.** Beschichtungsmittel gemäß Anspruch 4, **dadurch gekennzeichnet, dass** B) ausgewählt ist aus der Gruppe bestehend aus wasserdispergierbaren Polyester-, Alkyd-, Maleinat-, Epoxid- und Phenol-Formaldehydharzen, Melamin-Formaldehydharze, wasserdispergierbare Acryl- und Methacrylcopolymeren, wässrige Dispersionen von Polymeren aus ethylenisch ungesättigten Verbindungen wie zum Beispiel Styrol, Butadien, Acrylate, Methacrylate, Ethylen, Vinylchlorid, und Vinylalkoholester, wässrige Polyurethan- und Polyharnstoffdispersionen, wässrige Silikonharz-, Epoxidharz- und Epoxyacrylatdispersionen, und Bitumenemulsionen.

**6.** Beschichtungsmittel gemäß Anspruch 4 oder 5, **dadurch gekennzeichnet, dass** der Anteil von B) 1 Gew.-% bis 80 Gew.-%, bezogen auf das Beschichtungsmittel, beträgt.

**7.** Verfahren zur Herstellung von härtbaren Beschichtungsmitteln umfassend die Verfahrensschritte:

1.) Bereitstellen einer wässrigen Emulsion enthaltend mindestens ein lineares oder zyklisches Polysiloxan beinhaltend mindestens eine quartäre Ammoniumgruppe und
2.) Einbringen der wässrigen Emulsion in ein härtbares Beschichtungsmittel.

**8.** Verfahren gemäß Anspruch 7, **dadurch gekennzeichnet, dass** die eingesetzte wässrige Emulsion eine Mikroemulsion ist, welche
das Polysiloxan beinhaltend mindestens eine quartäre Ammoniumgruppe in einer Menge von 10 Gew.-% bis 60 Gew.-%,

a) ein nichtionisches Tensid in einer Menge von 3 Gew.-% bis 40 Gew.-%,
b) ein Cotensid ausgewählt aus der Gruppe enthaltend anionische, kationische und amphotere Tenside in einer Menge von 0 Gew.-% bis 30 Gew.-%,
c) Wasser in einer Menge von 10 Gew.-% bis 75 Gew.-%,
d) Lösungsmittel in einer Menge von 0 Gew.-% bis 35 Gew.-%,
e) ein Öl oder Ölgemisch in einer Menge von 0 Gew.-% bis 50 Gew.-% der gesamten Öl-Phase bestehend aus Polysiloxan beinhaltend mindestens eine quartäre Ammoniumgruppe und e),
f) mindestens ein Salz in einer Menge von 0 Gew.-% bis 10 Gew.-%,

beinhaltet, wobei sich die Gew.-% außer im Falle von Komponente e) auf die Gesamtmikroemulsion beziehen.

**9.** Verfahren gemäß Anspruch 7 oder 8, **dadurch gekennzeichnet, dass** die eingesetzte Mikroemulsion mindestens ein lineares Polysiloxan enthält, bei dem die mindestens eine quartäre Ammoniumgruppe $\alpha,\omega$-ständig ist.

**10.** Härtbares Beschichtungsmittel erhältlich nach dem Verfahren gemäß mindestens einem der Ansprüche 7 bis 9.

**11.** Verfahren zur Herstellung von Beschichtungen umfassend die Verfahrensschritte:

1.) Bereitstellen einer wässrigen Emulsion enthaltend mindestens ein lineares oder zyklisches Polysiloxan beinhaltend mindestens eine quartäre Ammoniumgruppe,
2.) Einbringen der wässrigen Emulsion in ein härtbares Beschichtungsmittel und
3.) Härten des Beschichtungsmittels.

**12.** ) Beschichtung erhältlich nach dem Verfahren nach Anspruch 11.

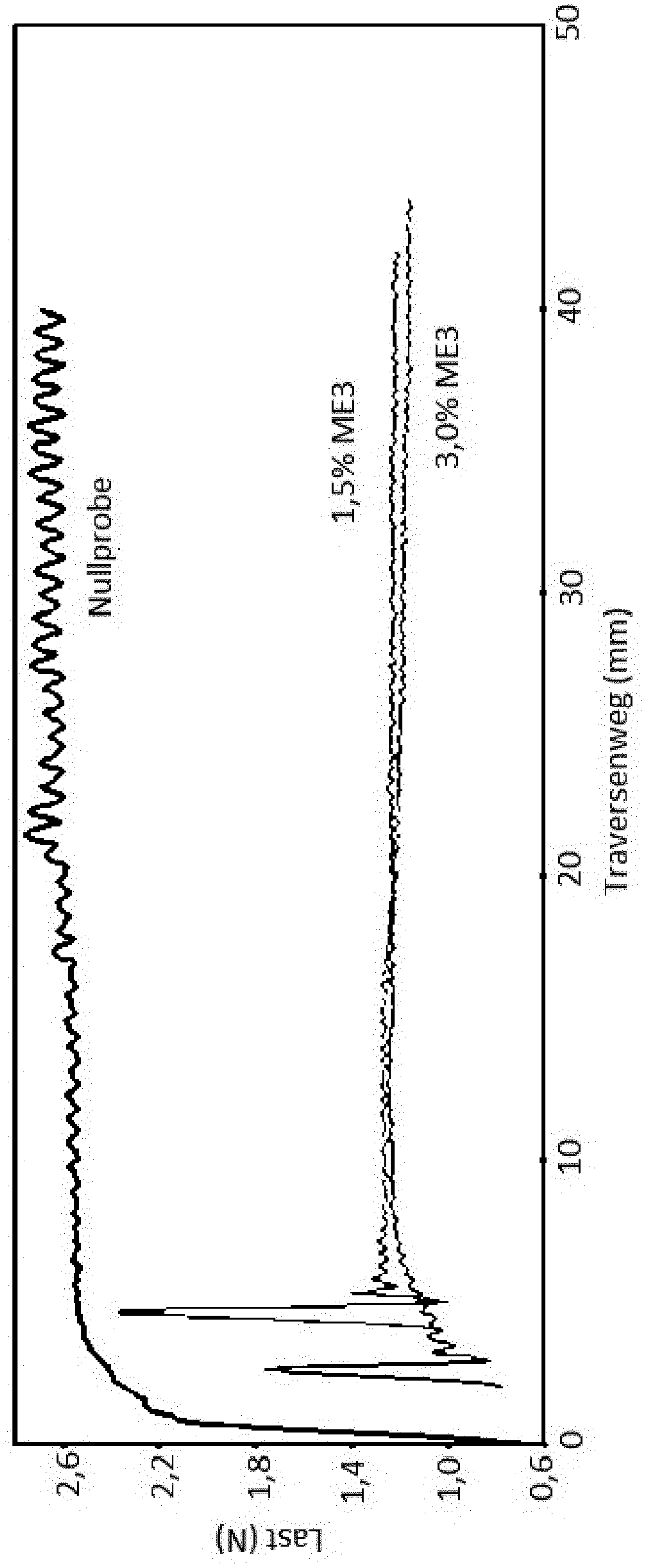
Last (N)
2,6
2,2
1,8
1,4
1,0
0,6
0
10
20
30
40
50
Traversenweg (mm)
Nullprobe
1,5% ME3
3,0% ME3

Europäisches Patentamt
European Patent Office
Office européen des brevets

# EUROPÄISCHER RECHERCHENBERICHT

Nummer der Anmeldung
EP 14 18 1517

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2002 308991 A (SHINETSU CHEMICAL CO) 23. Oktober 2002 (2002-10-23)<br>* Absatz [0001] *<br>* Beispiele 1,11 *<br>----- | 1-7,9-12 | INV.<br>C09D183/08 |
| X | WO 02/10254 A1 (WACKER CHEMIE GMBH [DE]; HERZIG CHRISTIAN [DE]; SCHATTENMANN WOLFGANG) 7. Februar 2002 (2002-02-07)<br>* Seite 2, Zeilen 1-27 *<br>* Seite 24, Zeilen 29-33 *<br>* Seite 26, Zeilen 17-32 *<br>* Beispiele 1,4 *<br>----- | 1-12 | |
| X | DE 10 2010 031178 A1 (EVONIK DEGUSSA GMBH [DE]) 12. Januar 2012 (2012-01-12)<br>* Absätze [0001], [0026] *<br>----- | 1,2,4-6,12 | |
| X | DE 10 2009 002477 A1 (EVONIK DEGUSSA GMBH [DE]) 21. Oktober 2010 (2010-10-21)<br>* Absätze [0001], [0013], [0016], [0017] *<br>* Anspruch ,12 *<br>----- | 1,2,4-6,12 | RECHERCHIERTE SACHGEBIETE (IPC) |
| X | DE 36 28 048 A1 (KANSAI PAINT CO LTD [JP]) 26. Februar 1987 (1987-02-26)<br>* Anspruch 1 *<br>* Seite 3, Zeilen 7-12 *<br>* Seite 3, Zeile 45 *<br>* Seite 4, Zeilen 20-23 *<br>* Seite 4, Zeilen 28-31 *<br>* Seite 4, Zeile 40 *<br>* Seite 5, Zeilen 5-11 *<br>* Beispiel 1 *<br>-----<br>-/-- | 1,2,4-6,12 | C09D<br>C08G |

Der vorliegende Recherchenbericht wurde für alle Patentansprüche erstellt

1

| Recherchenort | Abschlußdatum der Recherche | Prüfer |
|---|---|---|
| Den Haag | 28. Oktober 2014 | Queste, Sébastien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 14 18 1517

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 43 00 267 C1 (GOLDSCHMIDT AG TH [DE]) 21. April 1994 (1994-04-21)<br>* Seite 2, Zeilen 2-6 *<br>* Seite 5, Zeilen 12-50 *<br>* Seite 7, Zeilen 1-53 *<br>* Seite 8, Zeilen 51-54 *<br>----- | 1,2,4-6, 12 | |
| | | | RECHERCHIERTE SACHGEBIETE (IPC) |

Der vorliegende Recherchenbericht wurde für alle Patentansprüche erstellt

1

| Recherchenort | Abschlußdatum der Recherche | Prüfer |
|---|---|---|
| Den Haag | 28. Oktober 2014 | Queste, Sébastien |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 14 18 1517

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2014

| Im Recherchenbericht angeführtes Patentdokument | Datum der Veröffentlichung | Mitglied(er) der Patentfamilie | Datum der Veröffentlichung |
|---|---|---|---|
| JP 2002308991 A | 23-10-2002 | JP 4107552 B2 | 25-06-2008 |
| | | JP 2002308991 A | 23-10-2002 |
| WO 0210254 A1 | 07-02-2002 | DE 10036677 A1 | 14-02-2002 |
| | | EP 1305357 A1 | 02-05-2003 |
| | | JP 2004505144 A | 19-02-2004 |
| | | US 2004029981 A1 | 12-02-2004 |
| | | WO 0210254 A1 | 07-02-2002 |
| DE 102010031178 A1 | 12-01-2012 | CN 103080117 A | 01-05-2013 |
| | | DE 102010031178 A1 | 12-01-2012 |
| | | EP 2590988 A2 | 15-05-2013 |
| | | JP 2013535431 A | 12-09-2013 |
| | | US 2013167754 A1 | 04-07-2013 |
| | | WO 2012004082 A2 | 12-01-2012 |
| DE 102009002477 A1 | 21-10-2010 | CN 102405224 A | 04-04-2012 |
| | | DE 102009002477 A1 | 21-10-2010 |
| | | EP 2421874 A1 | 29-02-2012 |
| | | JP 2012524163 A | 11-10-2012 |
| | | US 2012037040 A1 | 16-02-2012 |
| | | US 2014208981 A1 | 31-07-2014 |
| | | WO 2010121873 A1 | 28-10-2010 |
| DE 3628048 A1 | 26-02-1987 | DE 3628048 A1 | 26-02-1987 |
| | | JP H0580513 B2 | 09-11-1993 |
| | | JP S6243468 A | 25-02-1987 |
| | | US 5008328 A | 16-04-1991 |
| DE 4300267 C1 | 21-04-1994 | DE 4300267 C1 | 21-04-1994 |
| | | EP 0606634 A1 | 20-07-1994 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0282720 A
- EP 0294642 A
- EP 0530974 A
- EP 617607 A
- EP 080714 A
- WO 2001082879 A
- US 6207141 B
- EP 228003 A1
- EP 634431 A1
- WO 9215405 A
- WO 2012130711 A2
- DE 10114689 A1
- DE 102009008950 A1